Europäisches Patentamt

European Patent Office

Office européen des brevets

(11) Veröffentlichungsnummer: · **0 364 883**
**A2**

(12) # EUROPÄISCHE PATENTANMELDUNG

(21) Anmeldenummer: **89118968.0**

(22) Anmeldetag: **12.10.89**

(51) Int. Cl.⁵: **B23D 15/00**

(30) Priorität: **20.10.88 DE 3835775**

(43) Veröffentlichungstag der Anmeldung:
**25.04.90 Patentblatt 90/17**

(84) Benannte Vertragsstaaten:
**CH DE ES FR GB IT LI**

(71) Anmelder: **LUDWIG BOSCHERT MASCHINEN-
UND APPARATEBAU GMBH & CO. KG
Mattenstrasse 1
D-7850 Lörrach-Hauingen(DE)**

(72) Erfinder: **Kunz, Peter, Dipl.-Ing.
Wiesenring 2
D-7850 Lörrach-Hauingen(DE)**

(74) Vertreter: **Gauger, Hans-Peter, Dipl.-Ing.
Patentanwälte Dipl.-Ing.Hans-Jürgen Müller
Dipl.-Chem.Dr.Gerhard Schupfner
Dipl.-Ing.Hans-Peter Gauger Postfach 80 13
69 Lucile-Grahn-Strasse 38
D-8000 München 80(DE)**

(54) **Ausklinkvorrichtung mit einem Stellantrieb zur Winkelverstellung des Ausklinkwerkzeuges.**

(57) Bei einer Ausklinkvorrichtung ist ein Stellantrieb zur Winkelverstellung des Ausklinkwerkzeuges mit einer an einem Lagerzapfen (15,18) eines Stellringes (10) für das Untermesser (12) festgelegten Wellenbremse (22) und einem die Drehung des Lagerzapfens winkelmäßig zählenden Impulsgeber (24-28) gebildet, der einen Drehstrommotor (21) steuert, welcher über ein Getriebe mit dem Lagerzapfen getriebemäßig verbunden ist.

Fig. 2

EP 0 364 883 A2

Xerox Copy Centre

**Ausklinkvorrichtung mit einem Stellantrieb zur Winkelverstellung des Ausklinkwerkzeuges**

Die Erfindung bezieht sich auf eine Ausklinkvorrichtung mit einem Stellantrieb zur Winkelverstellung des Ausklinkwerkzeuges gemäß der durch den Oberbegriff des Patentanspruches 1 angegebenen Gattung.

Bei einer aus der DE-PS 34 33 658 bekannten Ausklinkvorrichtung dieser Art ist das Getriebeabtriebsrad des Stellantriebes mit einem Zahnkranz am Umfang eines hohl ausgebildeten Lagerzapfens das unteren Stellringes gebildet. Der untere Stellring ist mit dem oberen Stellring über eine achsparallele Starrachse verbunden und bildet einen zu dem Maschinentisch planparallel angeordneten Hilfstisch. Der untere Stellring bzw. Hilfstisch ist in eine Öffnung des Maschinentisches eingesetzt und mittels eines Drehlagers gelagert. Das Drehlager ist auf einer Stützhülse angeordnet und wird durch ein auch zur Schmierung des Getriebeabtriebsrades innerhalb der Tischöffnung aufrecht erhaltenes Ölbad geschmiert. Über die Stützhülse ist der Hohlraum des Lagerzapfens mit einer im wesentlichen querschnittsgleichen Auswurföffnung für die beim Ausklinken anfallenden Blechabfälle verbunden. Der das Getriebeabtriebsrad des Stellantriebes bildende Zahnkranz weist somit für den Zahneingriff mit einem ebenfalls in dem Ölbad geschmierten Antriebsritzel einen relativ großen Durchmesser auf. Über das Antriebsritzel ist schließlich eine Antriebsverbindung entweder mit einem Hydraulikmotor oder optimal auch mit einem numerisch gesteuerten Gleichstrommotor hergestellt.

Bei einem Stellantrieb dieser Ausbildung müssen nach jedem Arbeitshub des Stössels relativ große Schwungmassen in Bewegung gesetzt und später auch wieder abgebremst werden. Dadurch ergeben sich insbesondere bei größeren Ausklinkwinkeln Probleme für ein exaktes aufeinanderfolgendes Ansteuern der beiden winkelmäßig unterschiedlichen Schwenklagen der Stellringe. Bei Verwendung einer numerischen Steuerung ist daher eine ziemlich aufwendige Spannungsregelung für den hierbei verwendeten Gleichstrommotor erforderlich, um diese unterschiedlichen Schwenklagen antriebsseitig exakt ansteuern zu können.

Die durch die Patentansprüche gekennzeichnete Erfindung löst die **Aufgabe,** bei einer Ausklinkvorrichtung der angegebenen Art eine motor- und steuerungsmäßige Verbilligung für den Stellantrieb zu erhalten. Gleichzeitig soll ein problemloseres Ansteuern der winkelmäßig unterschiedlichen Schwenklagen der beiden Stellringe erreichbar sein, um eine präzise Einhaltung jedes vorgewählten Ausklinkwinkels größer als der festliegende minimale Spitzenwinkel des Obermessers zu ermöglichen.

Die mit der erfindungsgemäßen Ausklinkvorrichtung erreichbaren Vorteile liegen vorrangig in einer wesentlichen Verringerung der anteiligen Kosten des Stellantriebes. Durch die Anordnung der Wellenbremse auf dem Lagerzapfen des unteren Stellringes gemeinsam mit einem seine Drehung winkelmäßig zählenden Impulsgeber können jetzt auch die beiden winkelmäßig unterschiedlichen Schwenklagen der beiden Stellringe entsprechend jedem vorgewählten Ausklinkwinkel präzise eingehalten werden. Alle Fertigungstoleranzen im me chanischen Teil des Stellantriebes sind nämlich jetzt ohne jeden nachteiligen Einfluß, weil die Steuerung der unterschiedlichen Schwenklagen der beiden Stellringe abtriebsseitig erfolgt.

Ein Ausführungsbeispiel der erfindungsgemäßen Ausklinkvorrichtung ist in der Zeichnung schematisch dargestellt und wird nachfolgend näher erläutert. Es zeigt

Fig. 1 eine Schnittdarstellung der Ausklinkvorrichtung und

Fig. 2 den Stellantrieb der Ausklinkvorrichtung.

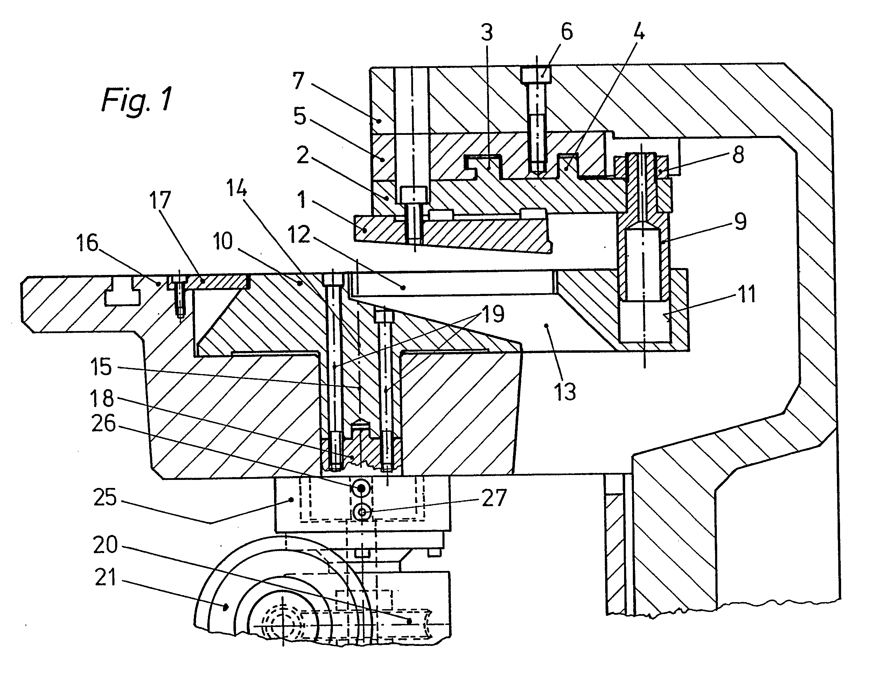

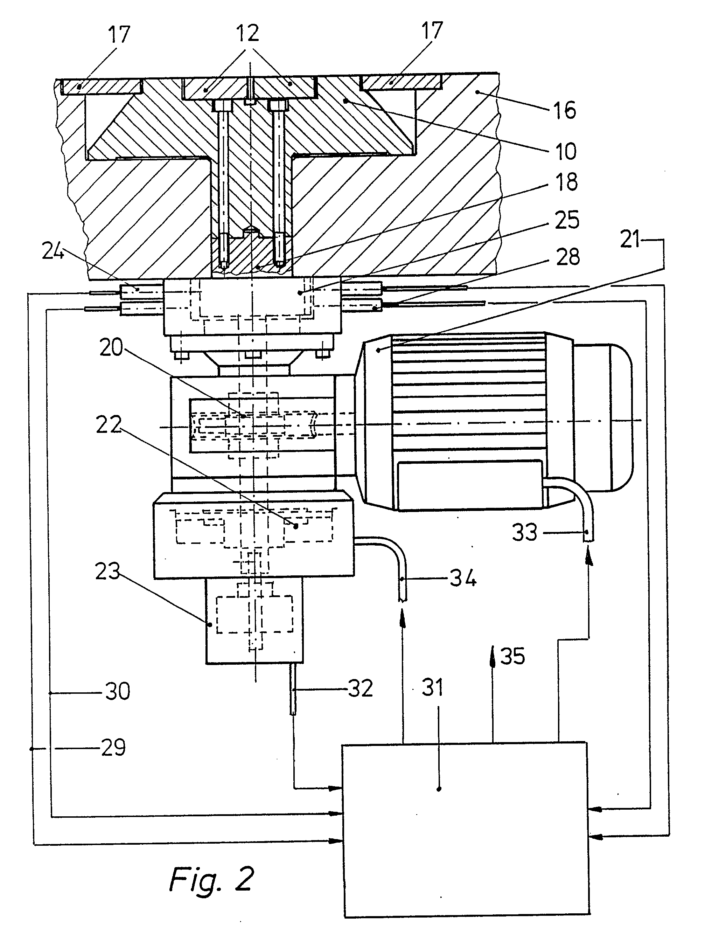

Die in den Fig. 1 und 2 gezeigte Ausklinkvorrichtung stellt eine Weiterbildung der nach der Gattung bekannten Ausklinkvorrichtung gemäß der DE-PS 34 33 658 dar. Sie umfaßt ein Ausklinkwerkzeug, dessen Obermesser 1 einen festliegenden minimalen Spitzenwinkel in der bevorzugten Größe von 30° aufweist und mittels Bolzen an einem oberen Stellring 2 festgelegt ist. Der obere Stellring 2 ist an einem einen verbreiterten Führungskopf aufweisenden Haltesteg 3 und an einem beabstandet ausgebildeten Führungssteg 4 in Führungsnuten einer Montageplatte 5 gehalten. Die Montageplatte 5 ist mittels Bolzen 6 an dem Kopf 7 eines vertikal beweglichen Stössels befestigt. Der obere Stellring 2 ist über eine mittels einer Überwurfmutter 8 festgelegte Starrachse 9 mit einem unteren Stellring 10 verbunden, der für dafür eine die Starrachse führende Sacklochbohrung 11 aufweist. Die Sacklochbohrung dient gleichzeitig als Ölvorrat, der über eine Axialbohrung der Starrachse nachgefüllt werden kann und deren Führung schmiert.

An dem unteren Stellring 10 ist das einen gleichen Spitzenwinkel wie das Obermesser 1 aufweisende Untermesser 12 des Ausklinkwerkzeuges festgelegt. Eine Auswurföffnung 13 für die bei jedem Ausklinken anfallenden Blechabfälle ist außerhalb einer zu der Starr achse 9 parallelen, nahe der Ausklinkspitze der beiden Ausklinkmesser liegenden Drehachse 14 ausgebildet. In der Drehachse 14 ist der untere Stellring 10 mittels eines einstükkig ausgebildeten Lagerzapfens 15 in einer Bohrung des Maschinentisches 16 gelagert. Der untere Stellring 10 ergibt einen zu dem Maschinentisch 16 planparallel angeordneten Hilfstisch und ist dafür in eine an der Auswurföffnung 13 nach unten offene Aussparung des Maschinentisches eingesetzt. Bei einer Drehung des unteren Stellringes 10 um die Drehachse 14 wird wegen der Verbindung über die Starrachse 9 auch der obere Stellring 2 mitgedreht, so daß damit eine Winkelverstellung des mit dem Obermesser 1 und mit dem Untermesser 12 gebildeten Ausklinkwerkzeuges vorgenommen wird.

Eine konzentrisch zu der Drehachse 14 verlaufende Winkelskala 17, die einen Meßbereich zwischen 0° und 180° aufweist, ist an der Arbeitsseite der Maschine zur Abdeckung der Aussparung des Maschinentisches 16 angeordnet. Wenn Ausklinkungen mit einem Ausklinkwinkel größer als 30° und damit größer als der festliegende minimale Spitzenwinkel des Obermessers 1 gewünscht werden, dann muß dafür mit zwei aufeinanderfolgenden Arbeitshüben des Stössels in zwei winkelmäßig unterschiedlichen Schwenklagen der beiden Stellringe 2 und 10 gearbeitet werden. Diese unterschiedlichen Schwenklagen werden mit einem nachfolgend an Hand der Fig. 2 näher beschriebenen Stellantrieb eingestellt.

Der in eine Lagerbohrung des Maschinentisches 16 eingesetzte Lagerzapfen 15 des unteren Stellringes 10 ist durch eine Welle 18 verlängert, die mittels Bolzen 19 eine drehfeste Verbindung mit dem unteren Stellring 10 aufweist. Die Welle 18 kann auch eine mit dem Lagerzapfen 15 einstückige Ausbildung aufweisen. Mit der Welle 18 ist ein Schneckenrad 20 drehfest verbunden, mit dem eine durch einen Drehstrommotor 21 angetriebene Schnecke im Zahneingriff steht. Auf der Welle 18 ist weiterhin eine als eine Scheibenbremse ausgebildete Wellenbremse 22 angeordnet, bei deren elektrisch gesteuerter Betätigung jede Drehung der Welle 18 und damit auch jede Drehung des unteren Stellringes 10 sowie des damit über die Starrachse 9 verbundenen oberen Stellringes 2 abgebremst werden kann. Schließlich ist auf der Welle 18 noch ein Impulsgeber 23 angeordnet, mit dem jede Drehung der Welle in bezug auf eine vorgewählte Null-Referenzstellung gezählt wird, die mittels eines Referenzschalters 24 vorwählbar ist. Der Referenzschalter 24 ist an einem für die Welle 18 vorgesehenen Anflanschlager 25 angeordnet und spricht auf einen an der Welle 18 befestigten Kontaktgeber 26 an. Ein weiterer Kontaktgeber 27 arbeitet mit einem zweiten Signalgeber 28 zusammen, mit dem eine maximale Schwenklage der beiden Stellringe entsprechend einem mit dem Stellantrieb beispielsweise erreichbaren maximalen Ausklinkwinkel von 150° gesteuert wird.

Der Referenzschalter 24 und der Signalgeber 28 sind über Signalleitungen 29 und 30 an eine Programmsteuerung 31 angeschlossen, an die auch der Impulsgeber 23 mittels einer Signalleitung 32 angeschlossen ist. Die Programmsteuerung 31 ist mit einer Eingabetastatur zum Vorwählen jedes gewünschten Ausklinkwinkels versehen. Wenn für einen Ausklinkwinkel größer als der festliegende minimale Spitzenwinkel des Obermessers mit zwei aufeinanderfolgenden Arbeitshüben des Stössels gearbeitet werden muß, dann werden die beiden winkelmäßig entsprechend unterschiedlichen Schwenklagen der Stellringe 2 und 10 durch die Programmsteuerung 31 vorgegeben, sobald die Null-Referenzstellung durch den Referenzschalter 24 über die Signalleitung 29 die entsprechende Dateneingabe erfahren hat und der gewünschte Ausklinkwinkel über die Eingabetastatur eingetastet wurde. Über eine Signalleitung 33 wird dann ein Startsignal an den Drehstrommotor 2i geliefert, wodurch die Welle 18 gedreht und damit auch die beiden Stellringe 2 und 10 verschwenkt werden.

Über eine Signalleitung 34 wird dabei zuvor ein Freigabesignal an die Wellenbremse 22 geliefert. Bei beginnender Drehung der Welle 18 beginnt auch der Impulsgeber 23 mit seiner winkelmäßigen Zählung der Wellendrehung. Das über die Signalleitung 32 an die Programmsteuerung 31 gelieferte Zählsignal kann dabei mittels eines Arfwärtszählers zur Sichtanzeige gebracht werden. Sobald bei der Drehung die eine der beiden vorgewählten Schwenklagen der beiden Stellringe erreicht ist, wird über die Signalleitung 33 ein Ausschaltsignal an den Drehstrommotor 21 und synchron damit über die Signalleitung 34 ein Betätigungssignal an die Wellenbremse 22 geliefert. Die beiden Stellringe 2 und 10 nehmen dann eine Ruhestellung ein. Durch die Programmsteuerung 31 kann jetzt über eine weitere Signalleitung 35 ein Arbeitssignal an den Stösselantrieb für die Ausführung eines ersten Arbeitshubes geliefert werden. Nach Beendigung dieses Arbeitshubes wird die Wellenbremse 22 gelöst und der Drehstrommotor 21 wieder eingeschaltet, um in entsprechender Weise die zweite Schwenklage der beiden Stellringe zu erhalten, in welcher dann der zweite Arbeitshub des Stössels für die Beendigung der Ausklinkung eines Werkstückes durchgeführt wird.

Die Stellgeschwindigkeit des Drehstrommotors kann auf einen anfänglichen Schnellgang und einen anschließenden Kriechgang bis zum Erreichen der jeweiligen Schwenklage der beiden Stellringe gesteuert sein. Als Wellenbremse kommen pneumatische, hydraulische oder auch elektromagnetische Ausbildungen in Frage.

## Ansprüche

1. Ausklinkvorrichtung mit einem Stellantrieb zur Winkelverstellung eines über einen Lagerzapfen (15) im Maschinentisch (16) drehbar gelagerten unteren Stellringes (10) für das Untermesser (12) des Ausklinkwerkzeuges, dessen Obermesser (1) an einem mit dem unteren Stellring gemeinsam um die gleiche Drehachse (14) verschwenkbaren, am Kopf (7) eines vertikal beweglichen Maschinenstössels festgelegten oberen Stellring (2) befestigt ist, wobei der Stellantrieb mit einem abtriebsseitig auf den Lagerzapfen (15) des unteren Stellringes (10) übersetzten, elektromotorisch angetriebenen Zahnradgetriebe gebildet und über eine auch für den Stösselantrieb vorgesehene Programmsteuerung (31) derart vorwählbar ist, daß jedes Ausklinken von veränderlichen Winkeln größer als ein festliegender minimaler Spitzenwinkel des Obermessers (1) mit zwei Arbeitshüben des Stössels in zwei winkelmäßig unterschiedlichen Schwenklagen der beiden Stellringe vorgenommen wird, dadurch **gekennzeichnet,** daß an dem Lagerzapfen (15,18) des unteren Stellringes (10) eine durch die Programmsteuerung (31) derart gesteuerte Wellenbremse (22) festgelegt ist, daß synchron mit dem Erreichen jeder der beiden unterschiedlichen Schwenklagen der beiden Stellringe (2,10) die Wellenbremse betätigt und nur nach dem ersten Arbeitshub des Stössels wieder gelöst wird, wobei die beiden Schwenklagen mit einem die Drehung des Lagerzapfens in bezug auf eine vorgewählte Null-Referenzstellung winkelmäßig zählenden Impulsgeber (24-28) erfaßt werden, der in den beiden Schwenklagen jeweils das Ausschalten des mit wiederholten Startsignalen eingeschalteten Antriebsmotors (21) steuert.

2. Ausklinkvorrichtung nach Anspruch 1, dadurch **gekennzeichnet,** daß die Wellenbremse (22) und der Impulsgeber (24-28) sowie das Getriebeabtriebsrad (20) eine Antriebseinheit bilden, die auf einer mit dem Lagerzapfen (15) drehfest verbundenen Lagerwelle (18) vormontiert ist.

3. Ausklinkvorrichtung nach Anspruch 1 oder 2, dadurch **gekennzeichnet,** daß der Lagerzapfen (15) bzw. die Lagerwelle (18) mittels eines am Maschinentisch (16) befestigten Anflanschlagers (25) gelagert ist, an welchem ein zur Erfassung der Null-Referenzstellung vorgesehener Signalgeber als Referenzschalter (24) sowie optimal ein zweiter Signalgeber (28) festgelegt sind, mit dem eine maximale Schwenklage der beiden Stellringe (2,10) entsprechend dem mit dem Stellantrieb erreichbaren maximalen Ausklinkwinkel gesteuert wird.

Fig. 1

*Fig. 2*